# FASCICULE DE BREVET EUROPEEN

(11) **EP 1 774 777 B1**
(45) Date de publication et mention de la délivrance du brevet: **15.04.2015**
(21) Numéro de dépôt: 05788504.8
(22) Date de dépôt: 11.07.2005
(51) Int. Cl.: H04N 5/781, H04N 5/85, H04N 5/907, H04N 21/41, H04N 21/4147, H04N 21/426, H04N 21/462, H04N 21/475, H04N 5/76

(54) **PROCÉDÉ ET DISPOSITIFS DE TRAITEMENT ET RESTITUTION DE FLUX MULTIMÉDIAS**
VERFAHREN UND VORRICHTUNGEN ZUR BEHANDLUNG UND WIEDERHERSTELLUNG VON MULTIMEDIA-STRÖMEN
METHOD AND DEVICES FOR PROCESSING AND REESTABLISHING MULTIMEDIA STREAMS

(30) Priorité: 12.07.2004 FR 0407738
(43) Date de publication de la demande: 18.04.2007
(73) Titulaire: Orange, 75015 Paris (FR)
(72) Inventeur: GASTINGER, René, F-35000 RENNES (FR); CUTULLIC, Christophe, F-35410 DOMLOUP (FR); DECERF, Erich, 53500 ERNEE (FR)
(74) Mandataire: Delumeau, François Guy
(86) Numéro de dépôt international: PCT/FR2005/001785
(87) Numéro de publication internationale: WO 2006/016057

(56) Documents cités:
- EP-A- 1 161 087
- EP-A- 1 331 814
- WO-A-02/37858
- WO-A-02/078334
- US-A1- 2003 063 224

## Description

L'invention concerne un procédé et un dispositif de traitement automatique de flux audio et / ou vidéo devant être restitués sur un terminal, flux tels que les émissions de télévision, en différé ou en direct, enregistrées ou non, les films diffusés sur des chaînes de télévision, les films publicitaires, la vidéo à la demande (abréviation VOD), etc., c'est à dire des flux diffusés à distance et dont la restitution sur un terminal ne peut être interrompue.

Le document EP 1331814 publié le 30 juillet 2003 décrit un système pour enregistrer des programmes vidéos de manière à ce qu'un utilisateur puisse les visualiser de manière différée sur un terminal. Dans un mode de réalisation particulier, lorsque l'utilisateur bascule d'un premier vers un second programme, le système enregistre automatiquement le premier programme tandis que le second est restitué sur le terminal de l'utilisateur.

Le document WO 02/37858 publié le 10 mai 2002 porte sur une méthode pour transmettre et reproduire du contenu audio et/ou vidéo consistant à des programmes "primaires" et "secondaires".

Le document EP 1161087 publié le 5 décembre 2001 divulgue un appareil de réception capable de recevoir et d'accumuler du contenu vidéo et de mettre ce contenu à disposition d'un utilisateur conformément aux requêtes de celui-ci.

Si au cours de la restitution d'un premier flux (tel que par exemple un film sur une chaîne de télévision), l'utilisateur est momentanément intéressé par la restitution d'un deuxième flux (tel que par exemple un bulletin météo diffusé sur une autre chaîne de télévision), il lui est possible de basculer de l'un à l'autre, en utilisant un moyen de sélection tel que par exemple une télécommande.

L'inconvénient est que, lorsque l'utilisateur souhaite revenir au premier flux, il ne peut pas revenir à l'endroit où il l'avait quitté, la diffusion du premier flux s'étant poursuivie pendant la restitution du deuxième flux.

L'invention vise à obtenir un procédé et un dispositif qui permettent de pallier cet inconvénient et d'améliorer le confort et la convivialité avec laquelle la restitution du premier flux est réalisée sur le terminal de l'utilisateur.

Dans ce but, un premier objet de l'invention est un procédé de traitement automatique de flux multimédias destinés à être restitués sur un terminal de restitution selon les revendications 1 à 10.

L'invention concerne également un programme d'ordinateur stocké sur un support informatique ; le programme comporte des instructions permettant de mettre en oeuvre le procédé selon les dites revendications 1 à 10.

Un autre objet de l'invention est un décodeur (STB) selon les revendications 12 à 14 et un système de traitement automatique de flux multimédias selon les revendications 15 et 16.

D'autres caractéristiques et avantages de l'invention ressortiront clairement de la description qui est faite ci-après d'un procédé de traitement selon l'invention et d'un dispositif associé. Cette description est faite à titre indicatif et nullement limitatif, en référence aux dessins annexés, dans lesquels :
- la figure 1 représente schématiquement un dispositif de traitement automatique de flux, mettant en oeuvre le procédé de traitement automatique selon l'invention,

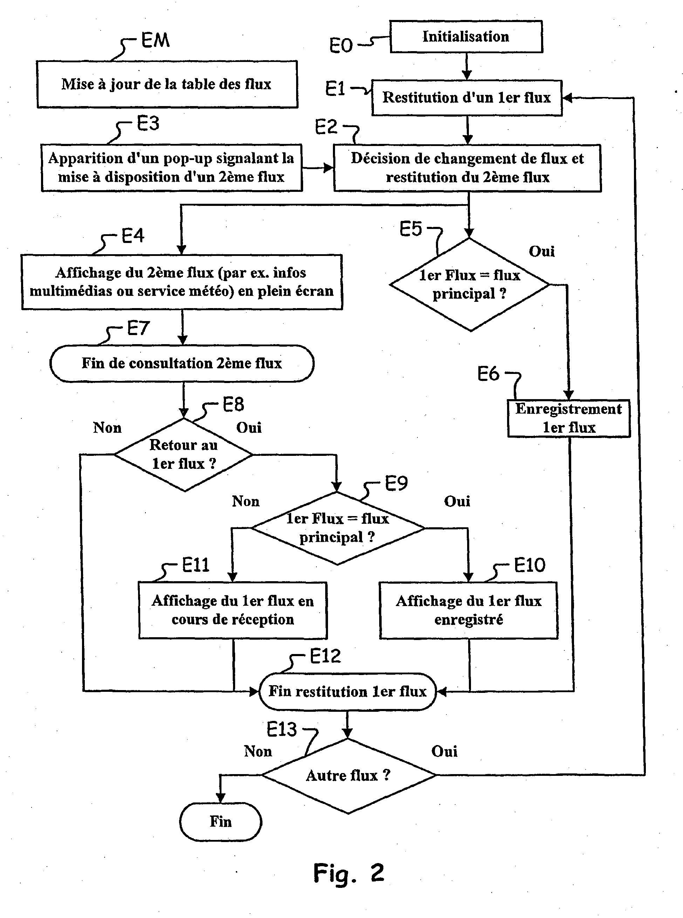

- la figure 2 représente sous forme d'organigramme les différentes étapes du procédé de traitement selon l'invention, et
- la figure 3 est un dispositif d'enregistrement susceptible d'être utilisé pour la mise en oeuvre du procédé selon l'invention.

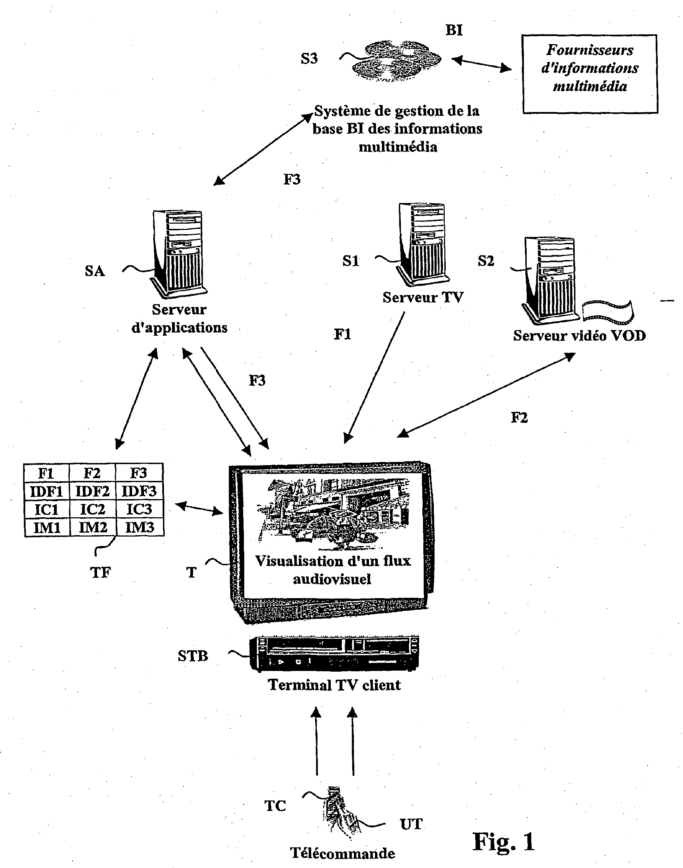

A la figure 1, un utilisateur UT dispose d'un terminal T de restitution d'un flux multimédia ; ce flux véhicule un contenu multimédia contenant de l'information ayant un sens pour l'utilisateur UT et destiné à lui être présenté par le terminal T. Le terme multimédia s'entend au sens large d'information audio et / ou vidéo et/ ou autre, comme par exemple un film, de la musique ou plus généralement toute oeuvre audiovisuelle ou multimédia.

La restitution de flux ou d'informations reçus par le terminal peut prendre la forme par exemple d'un affichage sur écran et / ou d'une émission sonore par un ou plusieurs haut-parleurs. Dans l'exemple de la figure 1, le terminal T de restitution est un téléviseur, éventuellement muni d'un décodeur ou d'un boîtier STB (acronyme anglais pour Set Top Box). Dans un autre exemple non représenté, le terminal T de restitution est un ordinateur ou un téléphone portable ayant un moniteur de visualisation et / ou un haut-parleur.

Le flux F1, F2 multimédia provient de l'extérieur du terminal T de restitution. Le flux F1, F2 provient par exemple d'un serveur S1 de télévision ou d'un serveur S2 de vidéos à la demande contenant éventuellement en complément un catalogue et des bandes-annonces. Les serveurs S1, S2 sont situés à distance du terminal T.

En plus des flux F1, F2 présents sur les serveurs S1, S2, il est prévu de restituer des informations multimédias I1, I2 sur les terminaux des utilisateurs. Ces informations I1, I2 peuvent être restituées simultanément ou à la place des flux F1, F2. Chaque information multimédia peut être prévue pour plusieurs des flux F1, F2, pour chacun de ceux-ci ou pour tous les flux F1, F2 ; chaque information peut être associée à un flux F1, F2 spécifique ou peut être indépendante de ceux-ci. Les informations multimédias I1, I2 sont des contenus multimédias comme par exemple des messages texte, des images animées ou fixes, des sons, des vidéos, des applications interactives (jeux, services d'achat en ligne, etc.). Ces informations multimédias sont produites par un ou plusieurs fournisseurs ou opérateurs FI, qui peuvent éventuellement être les mêmes que ceux propriétaires des serveurs S1, S2. Ces informations sont par exemple produites lors de l'enregistrement des flux F1, F2 sur les serveurs S1, S2, ou suite à cet enregistrement. Les informations multimédias sont envoyées et stockées par le ou les fournisseurs FI dans une base BI, en vue de leur envoi aux terminaux des utilisateurs. La base de données BI est située à distance du terminal T ; un système de gestion S3 de la base BI gère le contenu de la base BI et notamment les échanges entre la base BI et le serveur d'applications SA à qui sont transmises les informations multimédias sous la forme d'un flux F3 ; le serveur SA rediffuse ensuite ce flux F3 simultanément à un flux F1 ou F2 restitué sur le terminal T, ou à la place de ce flux F1, F2, en fonction d'instructions transmises par le système de gestion de la base des informations multimédias et / ou en fonction de requêtes de l'utilisateur.

Seuls trois flux ont été décrits ici, essentiellement pour décrire les trois principaux types de flux susceptibles d'être reçus par un terminal. Bien sûr, un même terminal peut recevoir de nombreux autres flux et notamment plusieurs flux fournis par des serveurs de TV différents, par des serveurs de vidéo différents, etc.

A chaque flux F1, F2, F3 est par exemple associé respectivement un identifiant IDF1, IDF2, IDF3 de flux sur les serveurs S1, S2 et la base BI. Pour visualiser ou entendre un film, une émission, etc., l'utilisateur UT sélectionne sur son terminal T de restitution un flux F1, F2, F3 parmi ceux présents sur les serveurs S1, S2 ou la base BI.

L'utilisateur sélectionne un flux à l'aide d'un moyen de sélection TC, qui est une télécommande dans l'exemple de la figure 1. Le moyen de sélection TC pourrait être également un clavier, une tablette, un écran tactile, une interface vocale, etc. Cette sélection est effectuée de manière classique dans le cas d'un téléviseur, par exemple dans un bouquet de chaînes de télévision reçues et accessibles en ligne par des terminaux STB ou PC connectés au réseau Internet ou en sélectionnant l'identifiant du flux choisi parmi plusieurs d'un catalogue ou d'un guide de programmes envoyé par le serveur S1 et / ou S2 au terminal T.

Chaque identifiant IDF1, IDF2, IDF3 de flux affiché sur l'écran du terminal T peut par exemple être balayé en affichant sur le terminal T du texte ou une image illustrant le contenu associé, par exemple l'affiche, le résumé du film ou de l'émission véhiculé par ce flux, une bande annonce, ces informations complémentaires étant envoyées avec l'identifiant de flux par le serveur S1, S2 et / ou la base BI au terminal T.

Selon l'invention, à chaque flux F1, F2, F3 accessible depuis le terminal est également associé un indicateur de préférence respectivement IC1, IC2, IC3 (par exemple de type booléen 1/0 ou oui/non) indiquant si le flux F1, F2, F3 est un flux principal ou non. Sur le serveur d'applications SA est créée et mémorisée une table TF des flux qui recense les différents flux F1, F2 accessibles à un instant donné depuis le terminal T avec, pour chaque flux l'identifiant IDF1, IDF2, IDF3 et l'indicateur de préférence IC1, IC2, IC3 correspondant.

Dans tout le texte de la présente demande, un flux est dit principal ou secondaire selon la valeur de son indicateur de préférence. Un flux est dit principal (indicateur de préférence positif, ayant par exemple comme valeur 1, oui, etc.) si son contenu doit être enregistré, par exemple s'il est considéré comme important, essentiel, incontournable, etc. pour l'utilisateur. Inversement, un flux est dit secondaire (indicateur de préférence négatif, ayant pour valeur par exemple 0 ou non) si son contenu ne doit pas être enregistré, par exemple s'il est considéré comme accessoire, de moindre importance, non prioritaire, etc. pour l'utilisateur.

Le procédé selon l'invention comprend une étape d'initialisation E0 au cours de laquelle une table TF des flux est créée et mémorisée. Cette étape E0 est réalisée par le serveur d'applications SA lorsque le terminal est mis en service une première fois par l'utilisateur. Cette étape E0 peut être réalisée à chaque mise en service du terminal, mais pas nécessairement, une ancienne table mémorisée précédemment pouvant être par exemple réutilisée.

Le procédé selon l'invention comprend également une étape EM de mise à jour de la table des flux ; cette étape EM est réalisée par le serveur d'applications à tout moment sur demande de l'utilisateur, d'un serveur ou du système de gestion S3 de la base BI diffusant un flux multimédia et / ou automatiquement en fonction d'un choix de flux à restituer fait par l'utilisateur, comme on va le voir dans des exemples ci-dessous. Cette étape peut également être réalisée automatique lors d'une mise en service du terminal, après l'étape E0 ou en l'absence d'étape E0.

Au cours de l'étape E0 de création de la table des flux, le serveur d'applications SA crée et mémorise la table TF des flux. Pour créer la table TF, le serveur d'applications liste, à un instant donné, les flux F1, F2, F3 accessibles par le terminal T, chaque flux étant représenté par son identifiant IDF1, IDF2, IDF3 et son indicateur de préférence IC1, IC2, IC3 associé. Selon une variante, le serveur SA peut également préciser, pour chaque flux, une valeur prédéfinie de son indicateur de préférence ; la dite valeur prédéfinie est par exemple fournie par le serveur S1, S2 ou le système de gestion S3 fournissant le flux correspondant ou fixée arbitrairement par le serveur d'applications SA. La table des flux peut être mémorisée, par exemple sur le serveur d'application (donc à distance du terminal), ou dans une zone mémoire du terminal ou du boîtier STB associé réservée à cet effet.

Au cours de l'étape EM de mise à jour de la table des flux, le serveur SA modifie si nécessaire la liste des flux de la table TF (par exemple si un nouveau flux est disponible ou au contraire si un flux précédemment listé n'est plus disponible au moment de la mise à jour). La table TF est ensuite mise à jour par le serveur SA sur instruction de l'utilisateur ou automatiquement lorsqu'un comportement particulier de l'utilisateur est détecté, ou lorsque la mise à jour de la table est demandée par un serveur ou par le système de gestion S3 (par ex: après la mise à jour d'une information multimédia).

La table peut ensuite être mise à jour par l'utilisateur, sur demande de ce dernier. Pour cela, pour chaque flux, l'utilisateur précise si le flux doit être considéré comme un flux principal ou non, c'est-à-dire précise pour chaque flux la valeur de son indicateur de préférence IC1, IC2, IC3. Si la valeur d'un indicateur de préférence a déjà une valeur prédéfinie, alors l'utilisateur peut conserver cette valeur ou la modifier.

L'utilisateur commande la mise à jour de la table TF à l'aide du moyen de commande, qui peut prévoir par exemple à cet effet une ou des touches de commande de déplacement dans une liste, une touche de validation et / ou une ou plusieurs touches de sélection.

Dans une variante, la table peut également être mise à jour par le serveur d'applications, sur demande d'un fournisseur de flux qui souhaite voir modifier la valeur de l'indicateur de préférence associé à un flux qu'il diffuse. Dans une autre variante, la table des flux peut être mise à jour automatiquement par le serveur d'applications, suite à un comportement particulier de l'utilisateur. Par exemple, lorsque l'utilisateur demande un changement du flux en cours de restitution sur son terminal, on peut prévoir que l'indicateur de préférence du flux initialement en cours de restitution soit fixé automatiquement à une valeur positive, pour permettre à l'utilisateur de revenir ensuite au premier flux sans perte d'information.

Bien sûr, il est possible de combiner plusieurs variantes, pour que la table soit modifiable par plusieurs entités : utilisateur, fournisseurs de flux TV, fournisseurs de services multimédias, etc.

On suppose que l'utilisateur demande la restitution d'un premier flux de son choix sur son terminal (étape E1). Cette demande est effectuée sur la figure 1. Puis, au cours de la restitution du premier flux choisi, l'utilisateur décide à un instant donné de basculer sur un deuxième flux (étape E2).

Cette décision peut être prise par exemple après l'apparition sur le terminal (étape E3), dans le premier flux restitué, d'une information multimédia signalant la mise à disposition ou la mise à jour du deuxième flux : une image, une icône, un son particulier, une vidéo, etc. Selon le cas, la dite indication peut occuper la totalité de la surface de l'écran ou bien apparaître sur une petite surface, ou bien masquer ponctuellement la bande sonore du premier flux, etc.

La décision de l'utilisateur peut également être indépendante de toute sollicitation extérieure présentée dans le premier flux.

Selon l'invention, lorsque l'utilisateur demande le basculement vers le deuxième flux, le deuxième flux demandé est restitué (étape E4) et en parallèle, la valeur de l'indicateur de préférence du premier flux est vérifiée (étape E5). Si le premier flux précédemment en cours de restitution est marqué comme flux principal (c'est-à-dire si son indicateur de préférence IC est spécifié comme tel), alors le dit premier flux précédemment restitué est mémorisé (étape E6) dans un espace mémoire situé par exemple dans une mémoire du décodeur STB ou à distance dans le serveur d'applications ; en parallèle, le deuxième flux est restitué (étape E4).

La restitution du deuxième flux se termine (étape E7) selon le cas :
- à la demande de l'utilisateur, qui demande un changement de flux ou demande l'arrêt de toute restitution par l'intermédiaire de sa télécommande, ou
- à la fin du deuxième flux, dans l'hypothèse où ce deuxième flux est de durée limitée ; c'est le cas par exemple d'un bulletin météo, d'un bulletin d'information, d'un film publicitaire, etc.

Enfin, selon l'invention, si un retour au premier flux initialement restitué est nécessaire, étape E8, (soit par ce que l'utilisateur l'a demandé, soit automatiquement à la fin du deuxième flux) et si le premier flux est un flux principal (c'est-à-dire si son indicateur de préférence est marqué comme tel), étape E9, alors le premier flux enregistré lors de l'étape E6 est restitué sur le terminal (étape E10) et en parallèle la suite du premier flux est enregistrée (poursuite de l'étape E6). Ainsi, après avoir regardé et / ou écouter le contenu du deuxième flux, l'utilisateur peut regarder ou écouter la suite du contenu du premier flux, certes en léger différé, mais du moins sans perte d'information.

Si le premier flux n'est pas un flux principal (c'est-à-dire si son indicateur de préférence est négatif), alors la restitution du premier flux tel que diffusé reprend (étape E11). L'utilisateur a dans ce cas perdu l'information diffusée pendant toute la restitution du deuxième flux, comme par le passé.

L'arrêt de la restitution du premier flux a lieu lorsque (E12) :
- l'utilisateur demande l'arrêt de la restitution du premier flux, ou
- la restitution du premier flux, enregistré ou non, est terminée (fin de l'émission, du film, etc.)

L'utilisateur peut alors (étape E13) :
- soit demander la restitution d'un nouveau flux (nouvelle étape E1)
- soit stopper toute restitution (fin du procédé).

Dans un premier exemple concret, sont accessibles sur le terminal deux flux F1, F2 diffusés par des serveurs S1, S2 de télévision et des informations multimédias contenant un bulletin météo, les dites informations étant diffusées par l'intermédiaire d'un système de gestion S3. Lors de la mise en service du terminal, la table des flux est créée et mémorisée par le serveur d'applications (étape E0) ; elle recense les flux F1, F2, F3 accessibles par le terminal T, leur identifiant respectif IDF1, IDF2, IDF3 et leur indicateur de préférence respectifs IC1, IC2, IC3 fixés par défaut à "non". L'utilisateur met à jour la table des flux (étape EM) en précisant la valeur IC1 = "oui", les valeurs IC2, IC3 restant égales à "non", puis demande l'affichage d'un film contenu dans le flux F1 (étape E2). Au bout d'un certain temps de restitution du film, une icône (étape E3) apparaît dans un coin de l'écran signalant qu'un bulletin météo vient d'être mis à jour et est disponible dans le flux F3. L'utilisateur décide de regarder le dit bulletin météo et demande son affichage sur son terminal (étape E2) en sélectionnant l'icône à l'aide d'une touche prévue à cet effet sur sa télécommande. Le bulletin météo contenu dans le flux F2 est restitué sur le terminal (étape E4). En parallèle, dans la mesure où le flux F1 initialement restitué est un flux principal (IC1 = "oui", étape E5), le flux F1 est enregistré et mémorisé dans une mémoire du décodeur STB du terminal de l'utilisateur (étape E6). La fin du bulletin météo (étape E7) entraîne automatiquement un retour sur le flux F1 précédemment diffusé (étape E8). Le flux F1 étant un flux principal (étape E9), la suite du film contenu dans le flux F1 enregistré est restituée sur le terminal (étape E10) et l'enregistrement du flux reçu continue en parallèle (étape E6). A la fin du film, l'utilisateur arrête le terminal et donc la restitution du flux F1 (étape E12).

Dans un deuxième exemple concret, sont accessibles sur le terminal deux flux F1, F2 diffusés par des serveurs S1, S2 de télévision et des informations multimédias contenant un jeu, les dites informations étant diffusées par l'intermédiaire d'un système de gestion S3. Le jeu comprend une série de questions en relation avec le film contenu dans le flux F1 et l'utilisateur peut trouver dans le film des indices lui facilitant la réponse aux questions posées.

Lors de la mise en service du terminal, la table des flux est créée et mémorisée par le serveur d'applications (étape E0); elle recense les flux F1, F2, F3 accessibles par le terminal T, leur identifiant respectif IDF1, IDF2, IDF3 et leur indicateur de préférence respectif IC1, IC2, IC3 fixés par défaut à "non". L'utilisateur ne met pas à jour la table des flux (aucune étape EM n'est réalisée) et demande simplement la restitution du film contenu dans le flux F1 (étape E2). Au bout d'un certain temps, une animation musicale (étape E3) se fait entendre via les haut-parleurs du terminal et une icône est affichée sur l'écran signalant qu'un jeu est proposé. L'utilisateur décide de jouer et demande l'affichage d'une question sur son terminal (étape E2) en sélectionnant l'icône à l'aide d'une touche prévue à cet effet sur sa télécommande. La sélection du jeu par l'utilisateur entraîne la mise à jour de l'indicateur IC1 à la valeur "oui" (étape EM, réalisée automatiquement suite au comportement de l'utilisateur). Cette mise à jour automatique permettra par la suite à l'utilisateur de revenir régulièrement au cours du jeu sur le film F1 sans coupure pour lui permettre de visualiser l'ensemble du film. La question contenue dans le flux F3 est alors restituée sur le terminal (étape E4). En parallèle, dans la mesure où le flux F1 initialement restitué est un flux principal (IC1 = "oui", étape E5), le flux F1 est enregistré et mémorisé dans une mémoire du décodeur STB du terminal de l'utilisateur (étape E6). L'utilisateur ne sachant pas répondre à la question posée demande le retour au film F1 (étapes E7, E8). Le flux F1 étant un flux principal (étape E9), la suite du film contenu dans le flux F1 enregistré est restituée sur le terminal (étape E10) et l'enregistrement du flux F1 reçu continue en parallèle (poursuite de l'étape E6). Ayant trouvé dans le film une réponse à la question du jeu, l'utilisateur interrompt la restitution du film (étape E12) et demande à nouveau la restitution du jeu (nouvelle étape E1) pour répondre à la question. L'utilisateur peut ainsi dans cet exemple répondre à une série de questions, en alternant l'affichage du film contenu dans le flux F1 et l'affichage du jeu contenu dans le flux F3.

Comme on l'a vu précédemment, la mise en oeuvre de l'invention passe par l'utilisation d'une table des flux dans laquelle sont mémorisés pour chaque flux F1, F2, F3 un identifiant de flux IDF1, IDF2, IDF3 et un indicateur de préférence IC1, IC2, IC3. Les indicateurs de préférence peuvent être mis à jour une ou plusieurs fois au cours du procédé par le serveur d'applications SA, régulièrement ou non, selon le cas :
- sur demande d'un serveur de diffusion diffusant le flux F1, F2 ou F3, ou
- sur demande de l'utilisateur,
- automatiquement suite à un comportement prédéfini de l'utilisateur

Bien sûr, il peut être désagréable pour l'utilisateur de constater qu'un flux non souhaité a été mémorisé parce que l'indicateur correspondant a été changé au détriment peut être d'un indicateur positif spécifié précédemment par l'utilisateur et cela sans que ce dernier n'ait été averti.

Pour éviter ceci, une amélioration de l'invention consiste à définir également pour chaque flux un indicateur de priorité IP1, IP2, IP3 de la manière suivante.

Un niveau de priorité est attribué à chaque entité susceptible de modifier les indicateurs de préférence, le niveau de priorité le plus élevé étant attribué de préférence à l'utilisateur ; par exemple, on peut attribuer la valeur 1 à l'indicateur de priorité de l'utilisateur, la valeur 2 à l'indicateur de priorité du serveur d'applications et la valeur 3 à l'indicateur de priorité des serveurs de diffusion.

Lors de la création de la table des flux, en plus de l'identifiant de flux et de l'indicateur de préférence, un indicateur de modification IM1, IM2, IM3 est spécifié pour chaque flux; lors de la création de la table des flux, les indicateurs de modifications sont initialisés à une valeur prédéfinie inférieure à tous les indicateurs de priorité attribués aux entités susceptibles de modifier les indicateurs de préférence (dans l'exemple on peut utiliser la valeur 4 comme valeur prédéfinie).

Lors d'une modification d'un indicateur de préférence IC1, IC2 ou IC3 dans la table des flux, l'indicateur de modification correspondant IM1, IM2 ou IM3 est mis à jour à la valeur du niveau de priorité de l'entité ayant demandé la modification de l'indicateur de préférence correspondant ; par exemple, si l'utilisateur demande une modification de l'indicateur de préférence IC1 du flux F1, l'indicateur de modification IM1 associé au flux F1 prend la valeur du niveau de priorité IP1 de l'utilisateur, dans l'exemple la valeur 1 ; dans un autre exemple, si le serveur d'applications SA demande une modification de l'indicateur de préférence IC2 du flux F2, l'indicateur de modification IM2 associé au flux F2 prend la valeur du niveau de priorité IP2 du serveur d'applications, dans l'exemple la valeur 2 ; etc.

Une entité est autorisée à modifier un indicateur de préférence IC uniquement si son niveau de priorité IP est supérieur à l'indicateur de modification IM associé à l'indicateur de préférence IC à modifier ; par exemple l'indicateur de modification IM1 du flux F1 étant égal à 1, le serveur d'application SA dont le niveau de priorité est égal à 2, donc inférieur à 1, n'est pas autorisé à modifier l'indicateur de préférence IC1 du flux F1 ; par contre l'indicateur de modification IM3 du flux F3 étant égal à 4 (sa valeur initiale), le serveur d'application SA dont le niveau de priorité est égal à 2 est autorisé à modifier l'indicateur de préférence IC3 du flux F3.

Cette amélioration permet de donner priorité aux souhaits de l'une des entités par rapport aux volontés des autres entités. Ainsi, dans les exemples ci-dessus, lorsqu'un indicateur de préférence aura été modifié par l'utilisateur (niveau de priorité le plus haut), il ne pourra pas être modifié par ailleurs par un fournisseur de services diffusant un flux particulier. La volonté de l'utilisateur est considérée ainsi comme prioritaire.

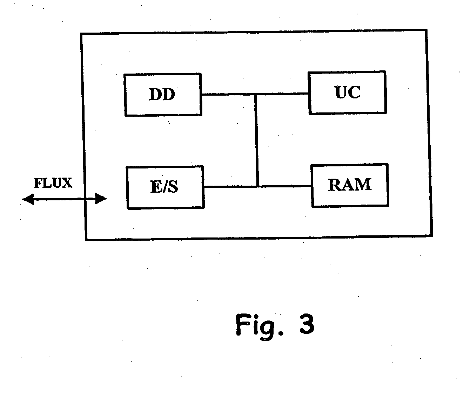

Sur la figure 3 est représenté un dispositif d'enregistrement susceptible d'être utilisé pour la mise en oeuvre du procédé selon l'invention. Ce dispositif comprend notamment :
- un dispositif de mémorisation, tel que par exemple une mémoire de type RAM ou un disque dur DD,
- un dispositif d'entrée / sortie E/S, pour recevoir un flux multimédia,
- un dispositif de commande, telle qu'une unité centrale UC, pour enregistrer dans le dispositif de mémorisation un flux multimédia reçu par le dispositif d'entrée / sortie si le dit flux reçu est un flux principal à enregistrer.

Un indicateur de préférence spécifie si le flux reçu est un flux principal à enregistrer ; cet indicateur est par exemple mémorisé dans une mémoire du dispositif d'enregistrement ou dans une mémoire distante mais accessible au dispositif de commande.

Le dispositif d'enregistrement pourra être intégré par exemple dans le décodeur STB associé au terminal, dans le terminal lui-même, ou bien encore dans le serveur d'applications.

## Revendications

1. Procédé de traitement automatique de flux multimédias (F1, F2, F3) destinés à être restitués sur un terminal (T) de restitution, comprenant l'étape suivante, réalisée sur demande d'un utilisateur (UT) du terminal et consistant à :
• restituer un premier flux sur le terminal (étape E1), le procédé étant **caractérisé en ce qu'**il comprend également les étapes suivantes, consistant à :
• associer à chaque flux (F1, F2, F3) un indicateur de préférence (IC1, IC2, IC3) spécifiant si le flux correspondant (F1, F2, F3) est un flux principal ou un flux secondaire (étape EM) ; et
• suite à une demande de restitution d'un deuxième flux (étape E2) :
- interrompre la restitution du premier flux ;
- restituer le deuxième flux sur le terminal (étape E4) ; et
- enregistrer le premier flux simultanément à la restitution du deuxième flux seulement si le premier flux est spécifié en tant que flux principal par l'indicateur associé audit premier flux (étape E6).

2. Procédé selon la revendication 1, comprenant également les étapes suivantes, réalisées simultanément après l'arrêt de la restitution du deuxième flux (étape E7) et consistant à :
• restituer le premier flux précédemment enregistré (étape E10)
• continuer l'enregistrement du premier flux (étape E6).

3. Procédé selon la revendication 2, dans lequel la restitution du deuxième flux est arrêtée :
• sur demande de l'utilisateur,
• lorsque l'utilisateur demande la restitution d'un autre flux, ou
• à la fin de la restitution du deuxième flux.

4. Procédé selon l'une des revendications 1 à 3, comprenant également une étape d'initialisation (EO) au cours de laquelle est créée une table des flux (TF) dans laquelle à chaque flux (F1, F2, F3) est associé un indicateur de préférence (IC1, IC2, IC3).

5. Procédé selon la revendication 4, dans lequel, au cours de l'étape d'initialisation, une valeur par défaut est attribuée à chaque indicateur de préférence (IC1, IC2, IC3), la valeur par défaut de l'indicateur de préférence associé à un flux étant :
• soit la valeur "secondaire"
• soit une valeur spécifiée par un fournisseur du dit flux.

6. Procédé selon l'une des revendications 4 à 5, au cours duquel une étape de mise à jour (EM) de la table de flux est réalisée :
• sur instruction de l'utilisateur et / ou
• sur instruction d'un fournisseur autorisé et / ou
• à chaque comportement prédéfini de l'utilisateur.

7. Procédé selon la revendication 6, dans lequel le comportement de l'utilisateur susceptible d'entraîner une mise à jour de la table des flux est :
• une commande de mise à jour de la table des flux, ou
• une commande de changement de flux à restituer.

8. Procédé selon l'une des revendications 6 ou 7, dans lequel une instruction de l'utilisateur et / ou une instruction d'un fournisseur d'un flux inclut une valeur à donner à l'indicateur de préférence d'un flux de la table des flux.

9. Procédé selon l'une des revendications 6 à 8, dans lequel l'étape de mise à jour (étape EM) de la table des flux (TB) se termine par la mémorisation de la dite table des flux (TB) dans une mémoire d'un serveur d'applications distant du terminal ou dans une mémoire du terminal.

10. Procédé selon l'une des revendications 1 à 9, dans lequel un niveau de priorité (IP) est associé à chaque entité de l'ensemble formé par l'utilisateur, le serveur d'applications et les fournisseurs de flux, et au cours duquel :
• lors de la mise à jour (étape EM) de la table des flux, un indicateur de préférence (IC1, IC2, IC3) et un indicateur de modification (IM1, IM2, IM3) est associé à chaque flux (F1, F2, F3),
• une mise à jour d'un indicateur de préférence dans la table des flux est réalisée par le serveur d'application uniquement si le niveau de priorité (IP) de l'entité ayant demandé la mise à jour du dit indicateur de préférence (IC1, IC2, IC3) est supérieur à l'indicateur de modification (IM1, IM2, IM3) associé à l'indicateur de préférence (IC1, IC2, IC3) à modifier, puis
• si une mise à jour a été réalisée, l'indicateur de modification associé à l'indicateur de préférence mis à jour est remplacé par le niveau de priorité associé à l'entité ayant demandé la modification.

11. Programme d'ordinateur stocké sur un support informatique, le dit programme comportant des instructions permettant de mettre en oeuvre le procédé selon l'une quelconque des revendications 1 à 10 lorsqu'il est chargé dans et exécuté par un système informatique.

12. Un décodeur (STB) apte à enregistrer un premier flux multimédia lorsque, suite à une demande de restitution d'un deuxième flux, la restitution dudit premier flux sur un terminal (T) de restitution est interrompue et que le deuxième flux est restitué sur ledit terminal, ledit premier flux étant associé à un indicateur de préférence (IC1, IC2, IC3) spécifiant si ledit premier flux est un flux principal ou un flux secondaire, le décodeur comprenant :
un dispositif d'entrée/sortie pour recevoir un flux multimédia ; et
un dispositif de commande (UC) apte à vérifier l'indicateur de préférence associé au premier flux, ledit dispositif de commande comprenant en outre un moyen pour enregistrer, dans un dispositif de mémorisation (DD, RAM), le premier flux simultanément à la restitution du deuxième flux seulement si le premier flux est un flux principal.

13. Décodeur selon la revendication 12, comprenant également un moyen pour restituer le premier flux précédemment enregistré après l'arrêt de la restitution du deuxième flux.

14. Décodeur selon l'une des revendications 12 ou 13, comprenant également une mémoire pour mémoriser une table dans laquelle est associé à chaque flux un indicateur de préférence spécifiant si le dit flux est un flux à enregistrer ou non.

15. Système de traitement automatique de flux multimédias (F1, F2, F3), comprenant un terminal (T) de restitution de flux et un moyen de commande (TC) pour permettre à un utilisateur (UT) notamment d'interrompre la restitution d'un premier flux et de demander la restitution d'un deuxième flux sur le terminal, le système étant **caractérisé en ce qu'**il comprend également :
- un décodeur (STB) selon la revendication 12;
- un dispositif de mémorisation (DD, RAM) pour enregistrer un flux multimédia ; et
- un serveur d'applications (SA) apte à envoyer au moins un flux multimédia vers le terminal (T) de restitution, le serveur d'applications comprenant :
• des moyens de gestion de flux pour recenser les flux accessibles à un instant donné depuis le terminal de restitution et pour associer, à chacun desdits flux, un indicateur de préférence (IC1, IC2, IC3) spécifiant si le flux correspondant est un flux principal ou un flux secondaire ; et
• une mémoire pour mémoriser une table dans laquelle est associé à chaque flux un indicateur de préférence spécifiant si le dit flux est un flux à enregistrer ou non.

16. Système selon la revendication 15, **caractérisé en ce que** le terminal (T) comporte des moyens de pilotage pour piloter le dispositif d'enregistrement situé à l'extérieur du terminal.

## Patentansprüche

1. Verfahren zur automatischen Bearbeitung von Multimedia-Strömen (F1, F2, F3), die dazu bestimmt sind, auf einem Wiederherstellungsterminal (T) wiederhergestellt zu werden, umfassend den folgenden Schritt, der auf Antrag eines Benutzers (UT) des Terminals durchgeführt wird und darin besteht:
- einen ersten Strom auf dem Terminal wiederherzustellen (Schritt E1),
wobei das Verfahren **dadurch gekennzeichnet ist, dass** es auch die folgenden Schritte umfasst, darin bestehend:
- jedem Strom (F1, F2, F3) einen Präferenzindikator (IC1, IC2, IC3) zuzuweisen, der spezifiziert, ob der entsprechende Strom (F1, F2, F3) ein Hauptstrom oder ein Nebenstrom ist (Schritt EM); und
- nach einem Antrag auf Wiederherstellung eines zweiten Stroms (Schritt E2):
* die Wiederherstellung des ersten Stroms zu unterbrechen;
* den zweiten Strom auf dem Terminal wiederherzustellen (Schritt E4); und
* den ersten Strom gleichzeitig mit der Wiederherstellung des zweiten Stroms nur dann aufzuzeichnen, wenn der erste Strom als Hauptstrom von dem dem ersten Strom zugewiesenen Indikator spezifiziert wurde (Schritt E6).

2. Verfahren nach Anspruch 1, umfassend auch die folgenden Schritte, die gleichzeitig nach dem Anhalten der Wiederherstellung des zweiten Stroms durchgeführt werden (Schritt E7) und darin bestehen:
- den vorher aufgezeichneten ersten Strom wiederherzustellen (Schritt E10),
- die Aufzeichnung des ersten Stroms fortzusetzen (Schritt E6).

3. Verfahren nach Anspruch 2, bei dem die Wiederherstellung des zweiten Stroms angehalten wird:
- auf Antrag des Benutzers,
- wenn der Benutzer die Wiederherstellung eines anderen Stroms beantragt, oder
- am Ende der Wiederherstellung des zweiten Stroms.

4. Verfahren nach einem der Ansprüche 1 bis 3, umfassend auch einen Schritt der Initialisierung (E0), während dessen eine Tabelle der Ströme (TF) erstellt wird, in der jeder Strom (F1, F2, F3) einem Präferenzindikator (IC1, IC2, IC3) zugeordnet ist.

5. Verfahren nach Anspruch 4, bei dem während des Initialisierungsschritts jedem Präferenzindikator (IC1, IC2, IC3) ein Standardwert zugewiesen wird, wobei der Standardwert des einem Strom zugewiesenen Präferenzindikators:
- entweder der "Nebenwert" ist;
- oder ein Wert ist, der von einem Lieferanten des Stroms spezifiziert wurde.

6. Verfahren nach einem der Ansprüche 4 bis 5, während dessen ein Aktualisierungsschritt (EM) der Strömetabelle durchgeführt wird:
- auf Befehl des Benutzers und/oder
- auf Befehl eines autorisierten Lieferanten und/oder
- bei jedem vordefinierten Verhalten des Benutzers.

7. Verfahren nach Anspruch 6, bei dem das Verhalten des Benutzers, das zu einer Aktualisierung der Tabelle der Ströme führen kann:
- ein Antrag auf Aktualisierung der Strömetabelle ist, oder
- ein Antrag auf Änderung der wiederherzustellenden Ströme ist.

8. Verfahren nach einem der Ansprüche 6 oder 7, bei dem ein Befehl des Benutzers und/oder ein Befehl eines Lieferanten eines Stroms einen Wert einschließt, der dem Präferenzindikator eines Stroms der Strömetabelle zu geben ist.

9. Verfahren nach einem der Ansprüche 6 bis 8, bei dem der Aktualisierungsschritt (Schritt EM) der Strömetabelle (TB) mit der Speicherung der Strömetabelle (TB) in einem Speicher eines Anwendungsservers, der vom Terminal entfernt ist, oder in einem Speicher des Terminals endet.

10. Verfahren nach einem der Ansprüche 1 bis 9, bei dem ein Prioritätsniveau (IP) jeder Einheit der vom Benutzer, dem Anwendungsserver und den Stromlieferanten gebildeten Gesamtheit zugewiesen wird, und während dessen:
- bei der Aktualisierung (Schritt EM) der Strömetabelle ein Präferenzindikator (IC1, IC2, IC3) und ein Änderungsindikator (IM1, IM2, IM3) jedem Strom (F1, F2, F3) zugewiesen werden,
- eine Aktualisierung eines Präferenzindikators in der Strömetabelle vom Anwendungsserver nur dann durchgeführt wird, wenn das Prioritätsniveau (IP) der Einheit, die die Aktualisierung des Präferenzindikators (IC1, IC2, IC3) beantragt hat, größer als der Änderungsindikator (IM1, IM2, IM3) ist, der dem zu ändernden Präferenzmodifikator (IC1, IC2, IC3) zugewiesen wurde, dann
- wenn eine Aktualisierung durchgeführt wurde, der dem aktualisierten Präferenzindikator zugewiesene Änderungsindikator durch das Prioritätsniveau ersetzt wird, das der Einheit, die die Änderung beantragt hat, zugewiesen ist.

11. Computerprogramm, das auf einem Informatikträger gespeichert ist, wobei das Programm Befehle umfasst, die es ermöglichen, das Verfahren nach einem der Ansprüche 1 bis 10 einzusetzen, wenn es in ein Informatiksystem geladen und von diesem ausgeführt wird.

12. Decoder (STB), der geeignet ist, einen ersten Multimedia-Strom aufzuzeichnen, wenn nach einem Antrag auf Wiederherstellung eines zweiten Stroms die Wiederherstellung des ersten Stroms auf einem Wiederherstellungsterminal (T) unterbrochen und der zweite Strom auf dem Terminal wiederhergestellt wird, wobei der erste Strom einem Präferenzindikator (IC1, IC2, IC3) zugewiesen ist, der spezifiziert, ob der erste Strom ein Hauptstrom oder ein Nebenstrom ist, wobei der Decoder umfasst:
- eine Eingangs-/Ausgangsvorrichtung, um einen Multimedia-Strom zu empfangen; und
- eine Steuervorrichtung (UC), die geeignet ist, den dem ersten Strom zugewiesenen Präferenzindikator zu überprüfen, wobei die Steuervorrichtung ferner ein Mittel umfasst, um in einer Speichervorrichtung (DD, RAM) den ersten Strom gleichzeitig mit der Wiederherstellung des zweiten Stroms nur dann aufzuzeichnen, wenn der erste Strom ein Hauptstrom ist.

13. Decoder nach Anspruch 12, umfassend auch ein Mittel zur Wiederherstellung des vorher aufgezeichneten ersten Stroms nach Anhalten der Wiederherstellung des zweiten Stroms.

14. Decoder nach einem der Ansprüche 12 oder 13, umfassend auch einen Speicher, um eine Tabelle zu speichern, in der jedem Strom ein Präferenzindikator zugewiesen ist, der spezifiziert, ob der Strom ein aufzuzeichnender Strom ist oder nicht.

15. System zur automatischen Bearbeitung von Multimedia-Strömen (F1, F2, F3), umfassend ein Terminal (T) zur Wiederherstellung eines Stroms und ein Steuermittel (TC), um es einem Benutzer (UT) insbesondere zu ermöglichen, die Wiederherstellung eines ersten Stroms zu unterbrechen und die Wiederherstellung eines zweiten Stroms auf dem Terminal zu beantragen, wobei das System **dadurch gekennzeichnet ist, dass** es auch umfasst:
- einen Decoder (STB) nach Anspruch 12;
- eine Speichervorrichtung (DD, RAM) zur Aufzeichnung eines Multimedia-Stroms; und
- einen Anwendungsserver (SA), der geeignet ist, mindestens einen Multimedia-Strom zu dem Wiederherstellungsterminal (T) zu senden, wobei der Anwendungsserver umfasst:
* Mittel zur Steuerung eines Stroms, um die zu einem gegebenen Zeitpunkt vom Wiederherstellungsterminal aus zugänglichen Ströme zu zählen und jedem der Ströme einen Präferenzindikator (IC1, IC2, IC3) zuzuweisen, der spezifiziert, ob der entsprechende Strom ein Hauptstrom oder ein Nebenstrom ist; und
* einen Speicher, um eine Tabelle zu speichern, in der jedem Strom ein Präferenzindikator zugewiesen ist, der spezifiziert, ob der Strom ein aufzuzeichnender Strom ist oder nicht.

16. System nach Anspruch 15, **dadurch gekennzeichnet, dass** das Terminal (T) Steuermittel umfasst, um die Aufzeichnungsvorrichtung, die sich außerhalb des Terminals befindet, zu steuern.

## Claims

1. Method of automatic processing of multimedia streams (F1, F2, F3) intended to be retrieved on a retrieval terminal (T), comprising the following step, carried out on request of a user (UT) of the terminal and consisting in:
• retrieving a first stream on the terminal (step E1), the method being **characterized in that** it also comprises the following steps, consisting in:
• associating with each stream (F1, F2, F3) a preference indicator (IC1, IC2, IC3) specifying whether the corresponding stream (F1, F2, F3) is a main stream or a secondary stream (step EM); and
• following a retrieval request in respect of a second stream (step E2):
- interrupting the retrieval of the first stream;
- retrieving the second stream on the terminal (step E4); and
- recording the first stream simultaneously with the retrieval of the second stream only if the first stream is specified as main stream by the indicator associated with said first stream (step E6).

2. Method according to Claim 1, also comprising the following steps, carried out simultaneously after the stoppage of the retrieval of the second stream (step E7) and consisting in:
• retrieving the previously recorded first stream (step E10) ;
• continuing the recording of the first stream (step E6).

3. Method according to Claim 2, in which the retrieval of the second stream is stopped:
• on request of the user,
• when the user requests the retrieval of another stream, or
• at the end of the retrieval of the second stream.

4. Method according to one of Claims 1 to 3, also comprising an initialization step (E0) in the course of which is created a streams table (TF) in which with each stream (F1, F2, F3) is associated a preference indicator (IC1, IC2, IC3).

5. Method according to Claim 4, in which, in the course of the initialization step, a default value is allotted to each preference indicator (IC1, IC2, IC3), the default value of the preference indicator associated with a stream being:
• either the value "secondary"
• or a value specified by a provider of said stream.

6. Method according to one of Claims 4 to 5, in the course of which a step (EM) of updating the stream table is carried out:
• on instruction of the user and/or
• on instruction of an authorized provider and/or
• at each predefined behaviour of the user.

7. Method according to Claim 6, in which the behaviour of the user liable to entail an updating of the streams table is:
• a command to update the streams table, or
• a command to change the stream to be retrieved.

8. Method according to one of Claims 6 or 7, in which an instruction of the user and/or an instruction of a provider of a stream includes a value to be given to the preference indicator of a stream of the streams table.

9. Method according to one of Claims 6 to 8, in which the step (step EM) of updating the streams table (TB) terminates with the storage of said streams table (TB) in a memory of an applications server remote from the terminal or in a memory of the terminal.

10. Method according to one of Claims 1 to 9, in which a priority level (IP) is associated with each entity of the set formed by the user, the applications server and the stream providers, and in the course of which:
• during the updating (step EM) of the streams table, a preference indicator (IC1, IC2, IC3) and a modification indicator (IM1, IM2, IM3) is associated with each stream (F1, F2, F3),
• an updating of a preference indicator in the streams table is carried out by the application server only if the priority level (IP) of the entity that requested the updating of said preference indicator (IC1, IC2, IC3) is greater than the modification indicator (IM1, IM2, IM3) associated with the preference indicator (IC1, IC2, IC3) to be modified, and then
• if an update has been carried out, the modification indicator associated with the updated preference indicator is replaced with the priority level associated with the entity that requested the modification.

11. Computer program stored on a computing medium, said program comprising instructions making it possible to implement the method according to any one of Claims 1 to 10 when it is loaded into and executed by a computing system.

12. Decoder (STB) able to record a first multimedia stream when, following a retrieval request in respect of a second stream, the retrieval of said first stream on a retrieval terminal (T) is interrupted and the second stream is retrieved on said terminal, said first stream being associated with a preference indicator (IC1, IC2, IC3) specifying whether said first stream is a main stream or a secondary stream, the decoder comprising:
an input/output device for receiving a multimedia stream; and
a control device (UC) able to verify the preference indicator associated with the first stream, said control device furthermore comprising a means for recording, in a storage device (DD, RAM), the first stream simultaneously with the retrieval of the second stream only if the first stream is a main stream.

13. Decoder according to Claim 12, also comprising a means for retrieving the previously recorded first stream after the stoppage of the retrieval of the second stream.

14. Decoder according to one of Claims 12 or 13, also comprising a memory for storing a table in which is associated with each stream a preference indicator specifying whether said stream is a stream to be recorded or not.

15. System for automatic processing of multimedia streams (F1, F2, F3), comprising a stream retrieval terminal (T) and a control means (TC) to allow a user (UT) in particular to interrupt the retrieval of a first stream and to request the retrieval of a second stream on the terminal, the system being **characterized in that** it also comprises:
- a decoder (STB) according to Claim 12;
- a storage device (DD, RAM) for recording a multimedia stream; and
- an applications server (SA) able to dispatch at least one multimedia stream to the retrieval terminal (T), the applications server comprising:
• stream management means for cataloguing the streams accessible at a given instant from the retrieval terminal and for associating, with each of said streams, a preference indicator (IC1, IC2, IC3) specifying whether the corresponding stream is a main stream or a secondary stream; and
• a memory for storing a table in which is associated with each stream a preference indicator specifying whether said stream is a stream to be recorded or not.

16. System according to Claim 15, **characterized in that** the terminal (T) comprises drive means for driving the recording device situated outside the terminal.
